# EUROPÄISCHE PATENTANMELDUNG

(11) **EP 3 217 287 A1**
(43) Veröffentlichungstag der Anmeldung: **13.09.2017**
(21) Anmeldenummer: 16159855.2
(22) Anmeldetag: 11.03.2016
(51) Int. Cl.: G06F 11/10

(54) **VERFAHREN UND EINRICHTUNG ZUR ERKENNUNG VON FEHLERN BEI DER SPEICHERUNG ODER ÜBERTRAGUNG VON DATEN**

(71) Anmelder: Siemens Aktiengesellschaft, 80333 München (DE)
(72) Erfinder: Barthel, Herbert, 91074 Herzogenaurach (DE); Walter, Maximilian, 90408 Nürnberg (DE); Schmauss, Wolfgang, 90607 Rückersdorf (DE); Sigwart, Edgar, 92224 Amberg (DE)

(57) **Zusammenfassung**

Die Erfindung betrifft ein Verfahren und eine Einrichtung zur Erkennung von Fehlern bei der Speicherung oder Übertragung von Daten vorgeschlagen, wobei die Daten als eine Folge von Telegrammen gespeichert oder übertragen werden, wobei jedes Telegramm mittels Codes oder mittels eines Generator-Polynoms auf jeweils ein Codewort abgebildet und dieses gespeichert oder übertragen wird, und wobei die Daten nach der Speicherung oder nach der Übertragung mittels des jeweiligen Codeworts und mittels des Codes oder des Generator-Polynoms verifiziert werden. Dabei werden bei einer Mehrzahl zu speichernder oder zu übertragender Telegramme eine Anzahl unterschiedlicher Codes oder unterschiedlicher Generator-Polynome verwendet. Dadurch wird die Wahrscheinlichkeit für die Fehlererkennung unabhängig von den Eigenschaften des Übertragungskanals und unabhängig von den übertragenen Daten.

## Beschreibung

Die Erfindung betrifft ein Verfahren zur Erkennung von Fehlern bei der Speicherung oder Übertragung von Daten gemäß dem Oberbegriff des Patentanspruchs 1, und eine Einrichtung zur Erkennung von Fehlern bei der Speicherung oder Übertragung von Daten gemäß dem Oberbegriff des Patentanspruchs 8.

Fehlererkennende Codierungen dienen zur Erkennung von Fehlern bei der Speicherung oder Übertragung von Daten. Sie basieren auf einer Abbildung von Nutzdaten der Länge k Bit auf Codewörter der Länge n Bit, wobei n > k gilt. Die Codewörter werden an Stelle der Nutzdaten übertragen bzw. gespeichert. Da n > k gilt, gibt es nur 2^{k} aus 2ⁿ gültige Codewörter. Lediglich im Fehlerfall können ungültige Codewörter empfangen werden. Der Empfang eines ungültigen Codeworts zeigt daher einen Übertragungs- bzw. Speicherfehler an. Die mit einem gemeinsamen Codewort codierten Daten (Nutzdaten) sollen im Folgenden auch als Telegramm bezeichnet werden; ein solches Telegramm kann beispielsweise ein Byte (8 Bit) umfassen. Bei der paketvermittelten Datenübertragung, beispielsweise mittels eines Internet-Protokolls wie TCP/IP, ist das Telegramm im hier verwendeten Sprachgebrauch nicht notwendiger Weise das komplette Datentelegramm, sondern zumindest die sog. Payload, also die mittels der Codierung, also beispielsweise einer Prüfsumme, geschützten Nutzdaten eines Datentelegramms. Sofern auch Adressinformationen oder andere Bestandteile des Datentelegramms in die Berechnung der Prüfsumme eingehen, gehören diese auch zum "Telegramm" im hier verwendeten Sinne.

Eine einfache Codierung besteht beispielsweise im Anfügen eines Paritätsbits, womit jedoch beispielsweise doppelte Bitfehler nicht erkannt werden können. Eine besonders häufig verwendete Technik ist die sog. zyklische Redundanzprüfung (Cyclic Redundancy Check, CRC). Diese basiert auf dem Anhängen von r Prüfbits an die Nutzdaten der Länge k Bit. Im Empfänger werden die Prüfbits aus den empfangenen Nutzdaten erneut berechnet und mit den empfangenen Prüfbits verglichen.

Ein unerwünschtes Ereignis ist gegeben, wenn ein formal gültiges Codewort empfangen wird, obwohl während der Übertragung Fehler aufgetreten sind. Die Wahrscheinlichkeit für dieses Ereignis (Pᵤₑ) hängt zum einen von der Differenz n-k ab (beim CRC-Verfahren entspricht dies der Anzahl der Prüfbits), zum anderen von der verwendeten Abbildung, das heißt der Codierungsvorschrift, die den Nutzdaten die entsprechenden Codewörter zuweist. Beim CRC-Verfahren ist diese Abbildung durch das sog. Generatorpolynom definiert. Die Prüfbits ergeben sich aus dem Rest der Polynomdivision aus Nutzdaten-Polynom geteilt durch das Generatorpolynom.

Um Pᵤₑ zu berechnen, wird üblicherweise angenommen, dass alle übertragenen Bits mit derselben Bitfehlerwahrscheinlichkeit p, und unabhängig voneinander verfälscht werden. Insbesondere wird angenommen, dass p unabhängig von den zu übertragenden Daten ist. Diese Annahmen werden als binärer symmetrischer Kanal bezeichnet (BSC).

In der Praxis werden diese Annahmen nie vollkommen erfüllt: die Bitfehlerrate schwankt, Fehler sind nicht voneinander unabhängig (Bündelfehler), und ein Übergang von "Eins" nach "Null" hat eine andere Fehlerwahrscheinlichkeit als von "Null" nach "Eins". Daher kommen - je nach Wert oder Bitmuster der zu übertragenden Nutzdaten - bestimmte Fehlermuster häufiger vor, als andere. Wenn die Übertragungsfehler bestimmte Muster besonders häufig annehmen, kann Pᵤₑ größer oder kleiner sein, als unter Annahme des BSC-Modells berechnet. Es ist allerdings oft schwierig bis unmöglich, das Vorzeichen oder gar den Betrag dieser Änderung zu bestimmen. Bei CRC-Verfahren sind im schlechtesten Fall alle auftretenden Fehlermuster ohne Rest durch das Generatorpolynom teilbar, dann können überhaupt keine Fehler mehr erkannt werden.

Nach dem gegenwärtigen Stand der Technik sind daher alle Berechnungen der Pᵤₑ mit nicht quantifizierbaren Unsicherheiten behaftet. Zu einer Verschlechterung der Pᵤₑ kommt es jedenfalls dann, wenn besonders häufig vorkommende Fehlermuster mit dem verwendeten Code, z.B. dem verwendeten Generatorpolynom des CRC-Verfahrens, nicht erkannt werden. Es ist also für jede Codierung bzw. jedes Generatorpolynom ein Szenario denkbar, in dem dieser Code bzw. dieses Generatorpolynom über eine besonders niedrige Pᵤₑ verfügt. Wenn das spätere Einsatzszenario, also beispielsweise die Fehlermechanismen eines Übertragungskanals oder die Struktur der Daten, nicht bekannt ist, kann die Pᵤₑ eines Codes/Generatorpolynoms zwar im Mittel berechnet werden, eine Begrenzung der Pᵤₑ für den schlechtesten Fall ist jedoch nicht möglich.

Es ist also eine Aufgabe der vorliegenden Erfindung, die Fehlererkennung bei der Übertragung oder Speicherung von Daten so zu gestalten, dass sie weitgehend unabhängig vom Übertragungskanal und den zu übertragenden Daten wird.

Erfindungsgemäß kann auch bei einer Häufung von hinsichtlich der Fehlererkennung ungünstigen Werten bzw. Bitmustern oder ungünstigen Fehlermustern vom statistischen Mittel der Güte der Fehlererkennung ausgegangen werden, indem die Codierungsvorschrift bzw. der zur Codierung verwendeten Code (d.h. bei CRC-Verfahren das Generatorpolynom) selbst variabel ist, d.h., dass nicht mehr für alle Telegramme dieselbe Codierungsvorschrift verwendet wird. Im Extremfall wird die Vorschrift für jedes Telegramm zufällig gewählt. Im Fall des CRC-Verfahrens wird dies durch eine zufällige, gleichverteilte Wahl des Generatorpolynoms aus dem Intervall [0 ; 2^{r}] ermöglicht. Dann wird für ein beliebiges Fehlerverhalten des Übertragungskanals ein DC (DC = "Diagnostic Coverage" = Wahrscheinlichkeit der Fehlererkennung)von 1-2^{-r} erreicht. Es kann also in allen Fällen für die Güte der Fehlererkennung vom statistischen Mittel ausgegangen werden.

Erfindungsgemäß werden also unterschiedliche Codierungsvorschriften (bzw. unterschiedlichen Generatorpolynome) für unterschiedliche Telegramme verwendet. In allen bisher bekannten Verfahren (z. B. Ethernet, WLAN, USB, CAN) wird dagegen ein konstantes Generatorpolynom eingesetzt, welches sich als allgemein vorteilhaft bewährt hat. Die Verwendung einer festgelegten Codierung hat etliche Vorteile, beispielsweise eine höhere Performance beim Kodieren und Dekodieren, garantierte Eigenschaften (z. B. Hamming-Distanz, Properness) etc., solange das BSC-Fehlermodell gültig ist; zudem lässt sich die Kodierung dann leicht mit einer dedizierten Hardware bewerkstelligen. Dem steht der eingangs erwähnte Nachteil gegenüber, dass die Pᵤₑ nur unter Annahme eines BSC berechnet oder abgeschätzt werden kann.

Die Aufgabe der Erfindung wird insbesondere durch das Verfahren gemäß dem Patentanspruch 1 und durch die Einrichtung gemäß dem Patentanspruch 8 gelöst.

Dabei wird ein Verfahren zur Erkennung von Fehlern bei der Speicherung oder Übertragung von Daten vorgeschlagen, wobei die Daten als eine Folge von Telegrammen gespeichert oder übertragen werden, wobei jedes Telegramm mittels Codes oder mittels eines Generator-Polynoms auf jeweils ein Codewort abgebildet und dieses gespeichert oder übertragen wird, und wobei die Daten nach der Speicherung oder nach der Übertragung mittels des jeweiligen Codeworts und mittels des Codes oder des Generator-Polynoms verifiziert werden. Dabei werden bei einer Mehrzahl zu speichernder oder zu übertragender Telegramme eine Anzahl unterschiedlicher Codes oder unterschiedlicher Generator-Polynome verwendet. Dadurch wird die Wahrscheinlichkeit für die Fehlererkennung unabhängig von den Eigenschaften des Übertragungskanals und unabhängig von den übertragenen Daten.

Zur Lösung der Aufgabe wird außerdem eine Einrichtung zur Erkennung von Fehlern bei der Speicherung oder Übertragung von Daten vorgeschlagen, wobei die Daten als eine Folge von Telegrammen gespeichert oder übertragen werden, wobei die Einrichtung dazu eingerichtet ist, jedes Telegramm mittels Codes oder mittels eines Generator-Polynoms auf jeweils ein Codewort abzubilden und dieses zu speichern oder zu übertragen wird, und wobei die Einrichtung zur Verifizierung der Daten nach der Speicherung oder nach der Übertragung mittels des jeweiligen Codeworts und mittels des Codes oder des Generator-Polynoms ausgebildet ist. Dabei ist die Einrichtung zur Verwendung einer Anzahl unterschiedlicher Codes oder unterschiedlicher Generator-Polynome bei einer Mehrzahl zu speichernder oder zu übertragender Telegramme ausgebildet. Damit lassen sich die bereits für das Verfahren geltenden Vorteile erreichen.

Vorteilhafte Ausgestaltungen des erfindungsgemäßen Verfahrens und der erfindungsgemäßen Einrichtung sind in den abhängigen Patentansprüchen angegeben. Die dabei beschriebenen Merkmale und deren Vorteile lassen sich sowohl einzeln, als auch in Kombination miteinander realisieren. Die Ausgestaltungen des Verfahrens sind sinngemäß auch mit der Einrichtung realisierbar, und umgekehrt.

In einer Ausgestaltung besteht das Codewort aus dem Telegramm und einem Prüfwert, wobei zur Abbildung der Prüfwert mittels des Codes oder mittels des Generator-Polynoms aus dem Telegramm errechnet wird. Dies hat den Vorteil, dass das Telegramm, also die Nutzdaten, aus der Übertragung bzw. dem Speichermedium ohne Dekodierung extrahiert werden kann.

Ein gehäufte Verwendung von weniger geeigneten Codierungen bzw. Generator-Polynomen kann verhindert werden, indem die Anzahl unterschiedlicher Codes oder die Anzahl unterschiedlicher Generator-Polynome zyklisch wiederholt verwendet wird, wobei für jedes Telegramm oder für jeweils eine Gruppe von Telegrammen der Code oder das Generator-Polynom gewechselt wird. Dabei ist es vorteilhaft möglich, bekanntermaßen ungeeignete Codierungen bzw. Generator-Polynome generell auszuschließen, beispielsweise anhand einer sog. "Blacklist"; dies gilt insbesondere für triviale Codierungen, die beispielsweise nur aus Nullen oder nur aus Einsen bestehen. Dem gegenüber kann auch eine Anzahl besonders gut geeigneter Codierungen bzw. Generator-Polynome vorgegeben werden, also eine sog. "Whitelist", aus der ausschließlich oder bevorzugt die Auswahl des zu verwendenden Codes oder des zu verwendenden Generator-Polynoms für jedes Telegramm zyklisch abwechselnd oder in einer besonders bevorzugten Ausgestaltung zufällig erfolgt.

Für die zufällige Auswahl für die Abbildung und für die Auswahl für die Verifizierung desselben Telegramms wird vorteilhaft jeweils ein gleichwirkender Pseudo-Zufallsgenerator mit demselben Startwert verwendet. Dabei ist sichergestellt, dass durch die Gleichwirkung und den identischen Startwert beidseitig stets eine identische Codierung bzw. Generator-Polynom eingesetzt wird.

Vorteilhaft wird zusammen mit den Daten eine Angabe über den zu verwendenden Code beziehungsweise das zu verwendende Generator-Polynom gespeichert oder übertragen, so dass zur Codierung und zur Verifizierung jeweils ein identischer Code bzw. Generator-Polynom verwendet wird.

Ein Ausführungsbeispiel des erfindungsgemäßen Verfahrens wird nachfolgend anhand der Zeichnungen erläutert; damit wird gleichzeitig ein Ausführungsbeispiel einer erfindungsgemäßen Einrichtung dargestellt.

Dabei zeigen:
- Figur 1: Prinzipschaltbilder für zwei in festcodierter Hardware ausgeführte Einrichtungen zur Durchführung eines 4-bit-CRC-Verfahrens mit festgelegten Generatorpolynomen gemäß dem Stand der Technik, und
- Figur 2: ein Prinzipschaltbild für eine in Hardware ausgeführte Einrichtung zur Durchführung eines 4-bit-CRC-Verfahrens mit variablem Generatorpolynom.

In diskreter Hardware oder in ASICS oder anderen LogikSchaltungen werden CRC-Prüfsummen üblicherweise mit Hilfe von Schieberegistern realisiert. Die Länge des Schieberegisters entspricht dem Grad des Generatorpolynoms plus Eins. An den Positionen, an denen sich im Generatorpolynom eine Eins befindet, ist im Schieberegister eine XOR-Operation eingefügt, die das zu schiebende Bit mit dem Ausgang des Schieberegisters verknüpft.

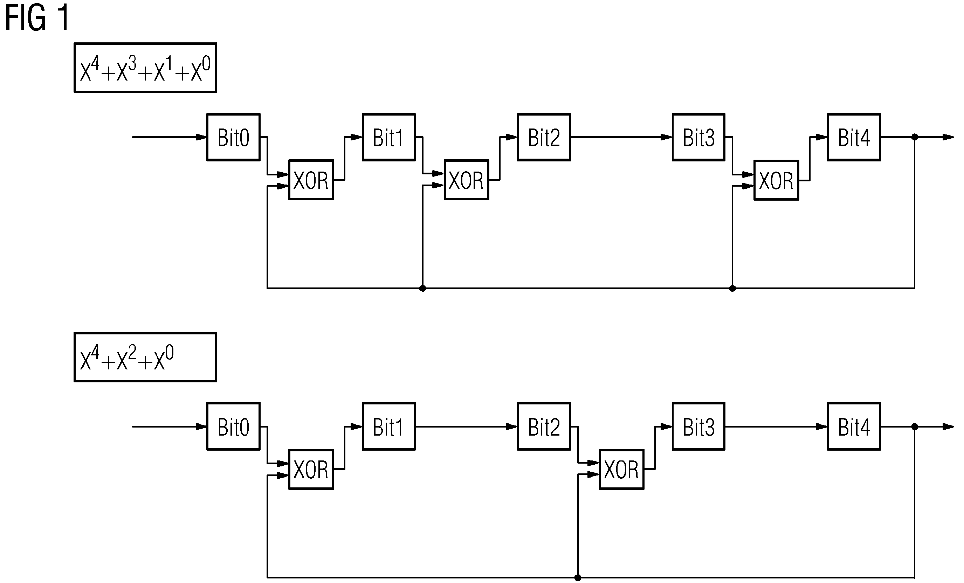

Die Figur 1 zeigt zwei Prinzipschaltbilder für zwei in festcodierter Hardware ausgeführte Einrichtungen zur Durchführung eines 4-bit-CRC-Verfahrens mit festgelegten Generatorpolynomen gemäß dem Stand der Technik. Die in der oberen Bildhälfte gezeigte Hardware-Implementierung führt das 4-Bit-CRC-Verfahrens für das Polynom x⁴+x³+x+1 aus, die untere Schaltung gilt für das Generator-Polynom x⁴+x²+1.

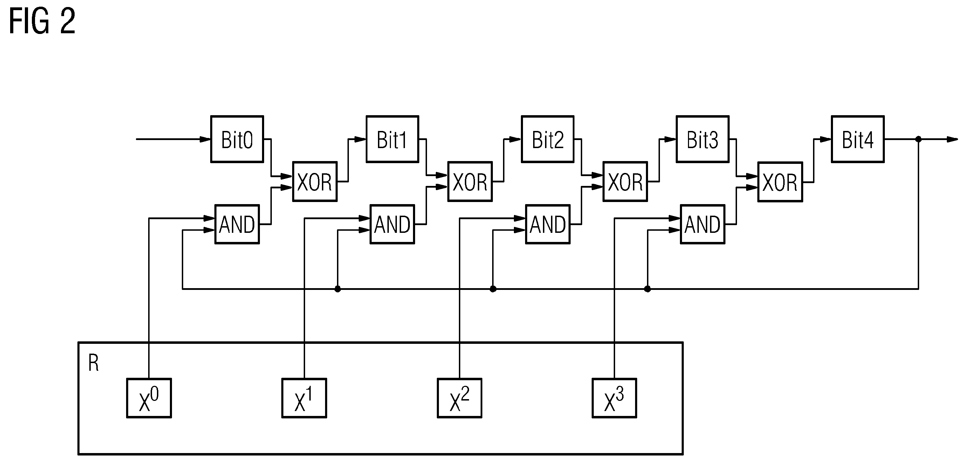

Dieses Verfahren kann wie in der Figur 2 dargestellt erfindungsgemäß so erweitert werden, dass das XOR-Glied zwischen alle Bits des Schieberegisters eingefügt wird. Außerdem wird ein Register R hinzugefügt, das das aktuell zu verwendende Generator-Polynom speichert. Der jeweils zweite Eingang der XOR-Gatter wird mit einer Konjunktion aus dem Ausgang des Schieberegisters und dem entsprechenden Wert des Registers R verbunden. Durch Modifikation von R kann dadurch das aktuell zu verwendende Generatorpolynom beispielsweise mittels eines Pseudozufallsgenerators eingestellt werden. Hinsichtlich Gatteranzahl und Signallaufzeit ergeben sich insgesamt nur geringfügige Zusatzaufwände. Anstelle des Pseudo-Zufallsgenerators kann das Register R auch durch eine entsprechend programmierte Steuerung parametriert werden, womit sich die weiter oben diskutierten Ausgestaltungen mit variablen Generatorpolynomen realisieren lassen.

Die erfindungsgemäße Einrichtung und das damit durchführbare Verfahrens können in verschiedener Weise vorteilhaft ausgestaltet werden.

In einer ersten Variante kann eine kleine, endliche Menge von Codes bzw. Generator-Polynomen reihum abwechselnd verwendet werden. In einer zweiten Variante erfolgt die Auswahl des Codes aus einer kleinen endlichen Menge von Codes für jedes Telegramm zufällig. In einer dritten Variante werden alle prinzipiell möglichen Codes (bei CRC-Verfahren sind dies 2^{r}) reihum abwechselnd verwendet, wobei aber prinzipiell ungeeignete Codes ausgeschlossen werden können. In einer vierten Variante erfolgt die Auswahl des Codes aus allen prinzipiell möglichen Codes für jedes Telegramm zufällig, wobei ebenfalls prinzipiell ungeeignete Codes ausgeschlossen werden können. Zu diesen vier Varianten können Sub-Varianten gebildet werden, indem beispielsweise ein Code (Generator-Polynom o.ä.) für eine Anzahl aufeinanderfolgender Telegramme widerverwendet wird, oder indem mehrerer Codes innerhalb eines Telegramms (z. B. Wechsel des Codes nach jedem Byte) verwendet werden.

Die erste und die zweite Variante haben den Vorteil, dass die verwendeten Codes auf bestimmte Eigenschaften (z. B. Hamming-Abstand, Properness) geprüft werden können. Demgegenüber besteht hier der Nachteil, dass die häufig vorkommenden Fehlermuster bekannt sein müssen, um die Codes gezielt auswählen zu können. Die dritte und die vierte Variante bieten im Mittel eine Pᵤₑ von 2^{-r} gegen jede Art von Fehler. Allerdings lässt sich im Mittel keine Pᵤₑ besser 2^{-r} nachweisen. Teilweise kann es auch zum Einsatz von "schlechten" Codes kommen (bei CRC-Verfahren z.B. gerade Polynome). Es ist daher sinnvoll, die Menge der Codes einzuschränken (bei CRC-Verfahren z.B. "nur ungerade Polynome, die den Faktor (1+x) enthalten"), was wie beschrieben in den Varianten drei und vier optional möglich ist.

Die Varianten eins und zwei haben gegenüber den Varianten drei und vier den Vorteil, dass alle Codes gleich häufig verwendet werden. Wenn eine Nachricht oder ein Telegramm zweimal unmittelbar hintereinander übertragen wird, ist außerdem sichergestellt, dass zwei unterschiedliche Codes verwendet werden. Es besteht jedoch das Risiko, dass der verwendete Code und die übertragenen Daten nicht unabhängig voneinander sind. Beispiel: Ein Sender überträgt zyklisch die Nutzdaten 1,2,3,4. Die übertragenen Werte wiederholen sich also in jedem vierten Telegramm. Werden in diesem Zusammenhang vier verschiedene Codes verwendet, wird jeder der Werte immer mit demselben Code kodiert. Bei der dritten und der vierten Variante besteht diese Gefahr nicht, allerdings kann nicht garantiert werden, dass alle Codes gleich häufig verwendet werden, oder dass ein Code nicht mehrfach hintereinander zum Einsatz kommt. Eine Implementierung der zweiten und der vierten Variante könnte aber um eine Speicherkomponente erweitert werden, die sich die zuletzt verwendeten Codes merkt, und ggf. eine Wiederholung der zufälligen Auswahl einfordert.

Die erstgenannte Sub-Variante hat den Vorteil, dass der Aufwand für die Generierung neuer Codes reduziert wird. Sie stellt daher einen Kompromiss zwischen der klassischen Variante (konstanter Code) und der Generierung eines Codes pro Telegramm dar.

Grundsätzlich muss die Auswahl des Codes in Sender und Empfänger auf exakt identische Weise erfolgen bzw. zur Auswahl desselben Codes bzw. Generator-Polynoms für das jeweilige Telegramm führen.

In Software-basierten Lösungen wird die CRC-Prüfsumme häufig mit Hilfe von Tabellen-basierten Verfahren generiert, wobei z. B. eine Tabelle mit 256 Einträgen verwendet wird. Dieses Verfahren lässt sich auch auf die erfindungsgemäße Generierung von CRC-Prüfsummen mit randomisierten Polynomen übertragen. Dazu müssen nicht die Tabelleneinträge neu generiert werden. Es genügt, jeweils eine andere Reihenfolge bzw. Permutation der Einträge zu verwenden. Dies kann z. B. durch ein zweites Feld "perm" mit 256 Einträgen erreicht werden:
Bisheriger Zugriff auf Tabelle: r = crctab[...]
Erweiterter Zugriff auf Tabelle: r = crctab[perm[...] ]

Speicherverbrauch und Rechenaufwand steigen daher nur minimal an. Die Anzahl der Permutationen übersteigt die Anzahl der möglichen Polynome bei weitem. Insofern ist diese Implementierung nicht mit Einschränkungen verbunden.

## Patentansprüche

1. Verfahren zur Erkennung von Fehlern bei der Speicherung oder Übertragung von Daten,
wobei die Daten als eine Folge von Telegrammen gespeichert oder übertragen werden,
wobei jedes Telegramm mittels Codes oder mittels eines Generator-Polynoms auf jeweils ein Codewort abgebildet und dieses gespeichert oder übertragen wird, und
wobei die Daten nach der Speicherung oder nach der Übertragung mittels des jeweiligen Codeworts und mittels des Codes oder des Generator-Polynoms verifiziert werden, **dadurch gekennzeichnet,**
**dass** bei einer Mehrzahl zu speichernder oder zu übertragender Telegramme eine Anzahl unterschiedlicher Codes oder unterschiedlicher Generator-Polynome verwendet werden.

2. Verfahren nach Patentanspruch 1,
**dadurch gekennzeichnet,**
**dass** das Codewort aus dem Telegramm und einem Prüfwert besteht,
wobei zur Abbildung der Prüfwert mittels des Codes oder mittels des Generator-Polynoms aus dem Telegramm errechnet wird.

3. Verfahren nach einem der vorhergehenden Patentansprüche, **dadurch gekennzeichnet,**
**dass** die Anzahl unterschiedlicher Codes oder die Anzahl unterschiedlicher Generator-Polynome zyklisch wiederholt verwendet wird,
wobei für jedes Telegramm oder für jeweils eine Gruppe von Telegrammen der Code oder das Generator-Polynom gewechselt wird.

4. Verfahren nach einem der vorherigen Patentansprüche,
**dadurch gekennzeichnet,**
**dass** die Auswahl des zu verwendenden Codes oder des zu verwendenden Generator-Polynoms aus einer Anzahl von Codes beziehungsweise Generator-Polynomen für jedes Telegramm zufällig erfolgt.

5. Verfahren nach Patentanspruch 4,
**dadurch gekennzeichnet,**
**dass** für die zufällige Auswahl für die Abbildung und für die Auswahl für die Verifizierung desselben Telegramms jeweils ein gleichwirkender Pseudo-Zufallsgenerator mit dem selben Startwert verwendet wird.

6. Verfahren nach einem der Patentansprüche 1 bis 3,
**dadurch gekennzeichnet,**
**dass** alle die für die jeweilige Prüfsummenlänge prinzipiell möglichen Codes beziehungsweise Generator-Polynome zyklisch abwechselnd verwendet werden, oder jeweils ein Code oder ein Generator-Polynom anhand eines Pseudo-Zufallswertes ausgewählt wird.

7. Verfahren nach einem der vorherigen Patentansprüche,
**dadurch gekennzeichnet,**
**dass** zusammen mit den Daten eine Angabe über den zu verwendenden Code beziehungsweise das zu verwendende Generator-Polynom gespeichert oder übertragen wird.

8. Einrichtung zur Erkennung von Fehlern bei der Speicherung oder Übertragung von Daten,
wobei die Daten als eine Folge von Telegrammen gespeichert oder übertragen werden,
wobei die Einrichtung dazu eingerichtet ist, jedes Telegramm mittels Codes oder mittels eines Generator-Polynoms auf jeweils ein Codewort abzubilden und dieses zu speichern oder zu übertragen wird, und
wobei die Einrichtung zur Verifizierung der Daten nach der Speicherung oder nach der Übertragung mittels des jeweiligen Codeworts und mittels des Codes oder des Generator-Polynoms ausgebildet ist,
**dadurch gekennzeichnet,**
**dass** die Einrichtung zur Verwendung einer Anzahl unterschiedlicher Codes oder unterschiedlicher Generator-Polynome bei einer Mehrzahl zu speichernder oder zu übertragender Telegramme ausgebildet ist.

9. Einrichtung nach Patentanspruch 8,
**dadurch gekennzeichnet,**
**dass** das Codewort aus dem Telegramm und einem Prüfwert besteht,
wobei die Einrichtung zur Abbildung des Telegramms auf den Prüfwert mittels des Codes oder mittels des Generator-Polynoms aus dem Telegramm eingerichtet ist.

10. Einrichtung nach einem der Patentansprüche 8 oder 9,
**dadurch gekennzeichnet,**
**dass** die Einrichtung zur zyklisch wiederholten Verwendung der Anzahl unterschiedlicher Codes oder der Anzahl unterschiedlicher Generator-Polynome eingerichtet ist, wobei für jedes Telegramm oder für jeweils eine Gruppe von Telegrammen der Code oder das Generator-Polynom gewechselt wird.

11. Einrichtung nach einem der Patentansprüche 8 bis 10,
**dadurch gekennzeichnet,**
**dass** für die Einrichtung vorgesehen ist, dass die Auswahl des zu verwendenden Codes oder des zu verwendenden Generator-Polynoms aus einer Anzahl von Codes beziehungsweise Generator-Polynomen für jedes Telegramm zufällig erfolgt.

12. Einrichtung nach Patentanspruch 11,
**dadurch gekennzeichnet,**
**dass** für die zufällige Auswahl für die Abbildung und für die Auswahl für die Verifizierung desselben Telegramms jeweils ein gleichwirkender Pseudo-Zufallsgenerator mit demselben Startwert vorgesehen ist.

13. Einrichtung nach einem der Patentansprüche 8 bis 10,
**dadurch gekennzeichnet,**
**dass** die zyklisch abwechselnde Verwendung aller für die jeweilige Prüfsummenlänge prinzipiell möglichen Codes beziehungsweise Generator-Polynome vorgesehen ist, oder dass die Einrichtung dazu vorgesehen ist, jeweils einen Code oder ein Generator-Polynom anhand eines Pseudo-Zufallswertes auszuwählen.

14. Einrichtung nach einem der Patentansprüche 8 bis 13,
**dadurch gekennzeichnet,**
**dass** die Einrichtung derart ausgestaltet ist, dass zusammen mit den Daten eine Angabe über den zu verwendenden Code beziehungsweise das zu verwendende Generator-Polynom gespeichert oder übertragen wird.
